# NEUE EUROPÄISCHE PATENTSCHRIFT

(11) **EP 1 208 332 B2**
(45) Veröffentlichungstag und Bekanntmachung des Hinweises auf die Entscheidung über den Einspruch: **12.09.2007**
(45) Hinweis auf die Patenterteilung: 17.03.2004
(21) Anmeldenummer: 99957282.9
(22) Anmeldetag: 05.11.1999
(51) Int. Cl.: F24D 3/14

(54) **NOPPENPLATTE**
KNOB PLATE
PLAQUE A NOPPES

(30) Priorität: 12.08.1999 FR 9910503
(43) Veröffentlichungstag der Anmeldung: 29.05.2002
(73) Patentinhaber: REHAU AG + Co, 95111 Rehau (DE)
(72) Erfinder: NAGEL, Patrice, F-57520 Lixing-les Rouhling (FR)
(86) Internationale Anmeldenummer: PCT/EP1999/008473
(87) Internationale Veröffentlichungsnummer: WO 2001/013044

(56) Entgegenhaltungen:
- DE-A- 2 853 043
- DE-A- 3 024 208
- DE-A- 3 346 998
- DE-C- 3 318 694
- FR-A- 2 746 426

## Beschreibung

Die vorliegende Erfindung bezieht sich auf eine Noppenplatte zum Verlegen von Leitungen für in Fußböden oder Wänden integrierte Heiz- oder Kühleinrichtungen, nach dem Oberbegriff des ersten Anspruchs.

Derartige Noppenplatten sind z.B. aus der DE 3024208 bekannt. Die Noppen sind die gleichmäßig über den plattenförmigen Grundkörper verteilt. In einer Draufsicht entsprechen die Noppen in etwa der Form eines gleichschenkligen Dreiecks, wobei die Grundseite dieser Dreiecke zweier benachbarter Noppen einander zugekehrt sind. Durch diese Anordnung der Noppen entstehen zwischen den Noppen Gänge, in die die Leitungen einbringbar sind. Aufgrund der Anordnung und Gestaltung der Noppen erstrecken sich die Gänge im wesentlichen parallel zu den Grundseiten des rechteckigen Grundkörpers oder aber um 45° geneigt schräg dazu. Die Leitungen können dann in die Gänge eingelegt werden, wobei es möglich ist, aufgrund der Gestaltung der Noppen die Leitungen in einem Bogen zu legen, um z.B. Spiralen oder aber mäanderförmige Schlaufen zu bilden. Dazu sind die Leitungen als flexible Schläuche ausgebildet.

Zum Installieren z. B. einer Fußbodenheizung werden die Noppenplatten auf dem Boden verlegt und anschließend die flexiblen Heizungsleitungen in die Gänge auf der Noppenplatte eingelegt. Anschließend wird Estrich auf die Noppenplatte und die darin eingelegten Heizungsleitungen aufgebracht, um den Fußboden zu bilden.

Durch die Anordnung der Noppen auf den plattenförmigen Grundkörpern der Noppenplatte ist es zwar möglich, die Heizungsleitungen entweder spiralförmig, oder aber mäanderförmig zu verlegen, andererseits zwingt die Anordnung der Noppen den Heizungsleitungen vorbestimmte Krümmungsradien auf. Dadurch wird die Gestaltungsfreiheit beim Verlegen der Heizungsleitungen eingeschränkt. Dies kann dazu führen, daß bei Räumen mit ungewöhnlichen Formen ein Verlegen von Heizungsleitungen mit diesen Noppenplatten nicht oder nur teilweise möglich ist.

Ein weiteres Problem bei derartigen Noppenplatten entsteht durch hohen Raumbedarf zum Transport und Lagern der Noppenplatten. Zwar bestehen die Noppenplatten üblicherweise aus sehr leichten Kunststoffen, wie z. B. Styropor, andererseits sind sie voluminös und beanspruchen ein entsprechend großes Transport- und Lagervolumen.

Aufgabe der Erfindung ist es daher, eine Noppenplatte der eingangs genannten Art derart zu verbessern, das sie sowohl flexibel eingesetzt werden kann, als auch Vorteile hinsichtlich Transport und Lagerung bietet.

Die Aufgabe wird erfindungsgemäß gelöst durch eine Noppenplatte gemäß Anspruch 1.

Diese Lösung ist einfach und hat den Vorteil, daß durch die gebildeten Freiräume es möglich ist, die Heizungsleitungen mit beinahe beliebigen Krümmungsradien zu verlegen. Auch ungewöhnliche Führungen der Leitungen in den Gängen zwischen den Noppen lassen sich realisieren, die vom üblichen Schema des Verlegens von Heizungsleitungen abweichen. So werden die Heizungsleitungen nicht mehr über die gesamte Noppenplatte durch die Noppen gehalten, sondern nur noch innerhalb der Gruppen von Noppen. Zwischen den Gruppen von Noppen liegen die Heizungsleitungen in frei wählbarer Anordnung. Gleichzeitig ermöglichen die Freiräume ein Reduzieren des Transportvolumens der Noppenplatten. Aufgrund der gewählten Dimensionierungen ist es möglich, zwei Noppenplatten aufeinander zu legen, wobei die Noppen der beiden benachbarten Platten zueinander weisen. Die Gruppen der einen Noppenplatte werden dabei zwischen den Gruppen der anderen Noppenplatte in den Freiräumen aufgenommen. Dadurch reduziert sich die Stapelhöhe erheblich.

In einer vorteilhaften Weiterbildung der Erfindung können vorzugsweise rippenförmige Vorsprünge auf dem Grundkörper vorgesehen sein, die gegenüber dem Grundkörper weniger vorstehen als die Noppen und auf welchen Vorsprüngen die Leitungen auflegbar sind. Durch diese Vorsprünge liegen die zwischen die Noppen eingebrachten Heizungsleitungen nicht vollständig auf dem Grundkörper, sondern nur auf den Vorsprüngen auf. Dadurch ist es für den eingebrachten Estrich leichter möglich, unter die Heizungsleitungen zu gelangen, um dadurch die Heizungsleitungen vollständig zu umschließen. Durch dieses vollständige Einbetten läßt sich die Wärmeübertragung von den Heizungsleitungen auf den Estrich und somit die Wirksamkeit der Fußbodenheizung verbessern.

Ein Vorteil kann es auch sein, wenn die Gruppen von Noppen in regelmäßigen Abständen über den Grundkörper verteilt sind. Durch diese regelmäßige Anordnung läßt sich die Noppenplatte universeller einsetzten. Vorteilhaft kann es dabei auch sein, wenn die Freiräume in regelmäßigen Abständen über die gesamte Oberfläche des Grundkörpers verteilt sind. Durch diese regelmäßige Beabstandung verbessert sich die Stapelfähigkeit der Noppenplatten. Grundsätzlich können die Gruppen und Freiräume auch unterschiedliche Abmessungen aufweisen und unregelmäßig über dem Grundkörper verteilt sein. Dann sollte jedoch sichergestellt sein, daß die Gruppen und Freiräume so bemessen und angeordnet sind, um ein Aufeinanderlegen der Noppenplatten bei einander zugekehrten Noppen zu ermöglichen.

Günstig kann es sein, wenn die Noppen innerhalb einer Gruppe so angeordnet sind, daß sie zwischen sich im Verhältnis zu den Hauptrichtungen des rechteckigen Grundkörpers längs verlaufende Gänge und quer verlaufende Gänge bilden, in die die Leitungen einlegbar sind. Dadurch läßt sich das Verlegen vereinfachen.

Auch kann es sich als vorteilhaft erweisen, wenn die Noppen benachbarter Gruppen zwischen ihnen Gänge bilden, die sich in jeweils eine der Hauptrichtungen der Platte erstrecken. Auch dadurch läßt sich das Verlegen insbesondere gerader Heizungsleitungen vereinfachen.

Zudem kann es sich als günstig erweisen, wenn die Noppen benachbarter Gruppen zwischen ihnen Gänge bilden, die sich schräg, vorzugsweise um 45° geneigt zu den Hauptrichtungen des Grundkörpers erstrecken. Auch dies erleichtert das Verlegen von geraden Heizungsleitungen.

Als vorteilhaft kann es sich erweisen, wenn jede Gruppe eine gerade Anzahl von Noppen aufweist. Dann lassen sich die Noppen immer paarweise anordnen, wodurch das Verlegen erleichtert werden kann.

In einer vorteilhaften Weiterbildung der Erfindung können die Vorsprünge als Rippen ausgebildet sein. Derartige Rippen ermöglichen zum einen günstiger herzustellende Werkzeuge und zum anderen vereinfacht dies das beliebige Verlegen der Heizungsleitungen entlang der Rippen.

Als vorteilhaft kann es sich dabei erweisen, wenn die Rippen sich zwischen den benachbarten Gruppen erstrecken. Dann lassen sich die Funktionen von Rippen und Noppen entkoppeln. Dadurch können die Heizungsleitungen innerhalb der Noppen vom Grundkörper beabstandet verlegt werden, und liegen nur außerhalb der Gruppen von Noppen auf den Rippen, bzw. dem Grundkörper auf.

Als vorteilhaft kann es sich zudem erweisen, wenn die Rippen mit einer Seitenkante des rechteckigen Grundkörpers einen Winkel von etwa 60° einschließen. Dadurch läßt sich auch bei diagonal auf dem rechteckigen Grundkörper verlegten Heizungsleitungen ein aufliegen der Heizungsleitungen auf dem Grundkörper bzw. den Rippen sicherstellen.

Weiterhin kann es sich als günstig erweisen, wenn die Rippen sich kreuzend ein Gittermuster bildend verlaufen. Auch dadurch läßt sich sicherstellen, daß die Heizungsleitungen von den Rippen unterstützt werden.

Dabei kann es sich als vorteilhaft erweisen, wenn die Rippen Gruppen von Noppen umrahmen. Auch dadurch lassen sich die Funktionen von den Noppen und Rippen trennen.

Als vorteilhaft kann es sich dabei erweisen, wenn das durch die Rippen erzeugte Gittermuster im wesentlichen rautenförmig ist. Durch eine solche rautenförmige Anordnung der Rippen läßt sich bei vielfältigen Anordnungen der Heizungsleitungen ein sicheres Aufliegen der Heizungsleitungen auf den Rippen realisieren.

Vorteilhaft kann es dabei sein, wenn die Rippen sich in den Freiräumen kreuzen. Auch dadurch läßt sich das sichere Aufliegen der Heizungsleitungen auf den Rippen verbessem.

In einer vorteilhaften Weiterbildung der Erfindung kann der Grundkörper einen umlaufenden Rand aufweisen, der im wesentlichen um die gleiche Höhe wie die Rippen gegenüber dem Grundkörper vorsteht. Auf diese Weise läßt sich ein Aufliegen der Heizungsleitungen auch an den Übergängen zu benachbarten Noppenplatten sicherstellen.

in einer vorteilhaften Weiterbildung der Erfindung können die Noppen im wesentlichen jeweils prismenförmig sein mit fünf Seitenflächen, wobei eine Vorderseitenfläche vorgesehen ist, an die sich beidseitig jeweils eine Verbindungsseitenfläche anschließt, wobei die beiden Verbindungsseitenflächen im wesentlichen parallel zueinander sind, und zwei Rückseitenflächen vorgesehen sind, die sich an die Verbindungsseitenflächen anschließen und miteinander verbunden sind. Eine derartige fünfflächige Gestaltung des Noppens ermöglicht ein individuelles Verlegen von Heizungsleitungen.

Von Vorteil kann es auch sein, wenn die Vorderseiten und/oder die Verbindungsseiten und/oder die Rückseiten zweier benachbarter Noppen am vom Grundkörper abgewandten Ende der Noppen einen größeren Abstand als zwischen diesem Ende und dem Grundkörper aufweisen. Dadurch läßt sich eine im wesentlichen konkave Gestaltung des Seitenflächen realisieren. Durch zwei einander gegenüberliegende konkave Seitenflächen lassen sich Aufnahmen für die Heizungsleitungen bilden. Diese Aufnahmen können dabei so gewählt sein, daß der größte Abstand der Seitenflächen im wesentlichen dem Durchmesser der rohrförmigen Heizungsleitungen entspricht, und der Abstand am oberen Ende so gewählt ist, daß die Flexibilität des Materials der Noppen oder der Noppenplatte ausreicht, um die Heizungsleitung hindurch zu drücken, ohne die Noppen zu beschädigen, und dadurch verhindert, daß die Heizungsleitung aus der durch die Noppen gebildete Aufnahme von selbst herausfällt.

Bei den derart gestalteten Noppen kann es sich als vorteilhaft erweisen, wenn entweder die Rückseitenflächen oder die Vorderseitenflächen der paarweise angeordneten Noppen einander zugekehrt sind. Dadurch lassen sich auch auf einfache Weise die Gänge verwirklichen.

Die Flexibilität beim Verlegen der Heizungsleitungen läßt sich auch erhöhen, wenn die Rückseitenflächen einen Winkel von ca. 90° einschließen.

Weiterhin läßt die Flexibilität beim Verlegen insbesondere gerader Leitungen erhöhen, wenn die Rückseitenflächen und/oder die Verbindungsseitenflächen und/oder die Vorderseitenflächen benachbarter Paare von Noppen miteinander fluchten.

Das Verlegen insbesondere gerader Leitungen läßt sich auch vereinfachen, wenn die Rückseitenflächen und/ oder die Verbindungsseitenflächen und/oder die Vorderseitenflächen von Noppen benachbarter Gruppen miteinander fluchten.

Gemäß der Erfindung können sind unterschiedliche Noppentypen vorgesehen sein deren Noppen sich in der Gestaltung der Vorderseitenflächen unterscheiden, wobei bei Noppen des ersten Noppentyps ein rippenförmiger Vorsprung, der gegenüber der Vorderseitenfläche vorsteht und die Noppen des zweiten Noppentyps ein dem rippenförmigen Vorsprung entsprechende rippenförmige Ausnehmung aufweisen, die gegenüber der Vorderseitenfläche zurückspringt. Bei einer solchen Gestaltung der Noppen läßt sich anhand der Rippen das Einklemmen von Heizungsleitungen zwischen benachbarten Noppen verbessern. So bilden die Vorderseitenflächen benachbarter Noppen einerseits einen Gang, der die Heizungsleitung führt, andererseits erzeugt der rippenförmige Vorsprung und die Ausnehmung eine Klemmvorrichtung für die Heizungsleitungen.

Weiterhin werden die Gruppen aus zumindest einem Paar von Noppen, deren Vorderseitenflächen, und einem Paar von Noppen, deren Rückseitenflächen einander zugewandt sind, gebildet. Dadurch werden die Gruppen von zumindest vier Noppen gebildet. Aufgrund der Anordnung der Noppen lassen sich die Heizungsleitungen in beliebigen Mustern verlegen.

Es kann sich auch als günstig erweisen, wenn die Gruppen jeweils von einem Paar von Noppen, deren Vorderseiten einander zugekehrt sind, und einem Paar von Noppen, deren Rückseiten einander zugewandt sind, begrenzt werden. Dadurch wird ein symmetrischer Aufbau der Noppenplatten ermöglicht, der die Übersicht beim Verlegen der Heizungsleitungen erleichtert.

Von Vorteil kann es zudem sein, wenn zumindest die Noppen elastisches Material aufweisen. Dadurch lassen sich die Heizungsleitungen mit einer gewissen Vorspannung zwischen die Noppen eindrücken.

Wenn die Noppenplatte aus Kunststoff, vorzugsweise Styropor gebildet ist, kann sie gute Isoliereigenschaften aufweisen.

Nachfolgend wird die Erfindung anhand eines Ausführungsbeispiels näher erläutert.

Es zeigen:
Fig. 1 die erfindungsgemäße Noppenplatte in einer Draufsicht;
Fig. 2 einen Ausschnitt der erfindungsgemäßen Noppenplatte aus Fig. 1 mit eingesetzten Leitungsstücken von Heizungsleitungen;
Fig. 3 die Ansicht aus Fig. 2 mit eingelegten Leitungsstücken, die in Bögen geführt sind;
Fig. 4 die Darstellung aus Fig. 2 mit einem eingelegten Leitungsstück, das unterschiedliche Krümmungsradien und gerade Abschnitte aufweist, die in unterschiedlichen Richtungen verlaufen;
Fig. 5 die erfindungsgemäße Noppenplatte mit einem Wandabschnitt, entlang dem die Noppenplatte verläuft, sowie mit eingelegter Heizungsleitung;
Fig. 6 eine Draufsicht der erfindungsgemäßen Heizungsplatte von oben mit eingelegter Heizungsleitung;
Fig. 7 die Noppenplatte in der Darstellung in Fig. 6 mit eingelegter Heizungsleitung;
Fig. 8 zwei aufeinandergelegte Noppenplatten in einer Seitenansicht;
Fig. 9 einen Ausschnitt der erfindungsgemäßen Noppenplatte in einer perspektivischen Darstellung, wobei eine Gruppe von Noppen dargestellt ist;
Fig. 10 eine perspektivische Ansicht einer Gruppe von Noppen;
Fig. 11 eine zweite perspektivische Ansicht der Gruppe von Noppen aus Fig. 10;
Fig. 12 eine Draufsicht auf eine Gruppe von Noppen der erfindungsgemäßen Noppenplatte mit einem zwischen den Noppen angeordneten Leitungsstück;
Fig. 13 die Ansicht aus Fig. 12 mit einem Leitungsstück größeren Durchmessers;
Fig. 14 eine schematische Darstellung einer Gruppe von Noppen mit schematischer Andeutung der zwischen den Noppen gebildeten Gänge;
   Die Darstellung aus Fig. 15 mit einer schematischen Darstellung schräg verlaufender Gänge;
Fig. 16 ein Verlegebeispiel von Heizungsleitungen in einem Raum;
Fig. 17 ein zweites Verlegebeispiel von Heizungsleitungen in einem Raum.

Die Noppenplatte 1 besteht aus einem Grundkörper 1a mit einer Vielzahl von Noppen 2. Sie besteht aus wärmeisolierendem, flexiblen und komprimierbarem Material, beispielsweise aus geschäumtem oder extrudiertem Polystyrol.

Die Noppen 2 sind jeweils in voneinander getrennte Gruppen 3 zusammengefaßt, wobei diese Gruppen 3 gleichmäßig über die gesamte Oberfläche 4 der Noppenplatte 1 verteilt sind. Zwischen den Gruppen 3 entstehen Freiräume 5. Auch diese Freiräume 5 sind gleichmäßig über die gesamte Oberfläche 4 der Noppenplatte 1, bzw. ihren Grundkörper 1a, verteilt angeordnet. Die Abstände zwischen den Gruppen 3 sind dabei so gewählt, daß sie Freiräumen mit Abmessungen erzeugen, die zumindest so groß sind, wie die Außenabmessungen der Gruppen.

Der Grundkörper ist im wesentlichen rechteckig mit senkrecht zueinander verlaufenden Seitenkanten. An den Seitenkanten weist der plattenförmige Grundkörper 1 a einen erhöhten Rand 6 auf, an den sich isolierte Reihen 7 von Noppen 2 befinden. Diese Gruppen sind unvollständig, und werden durch Aneinandersetzen einzelner Noppenplatten wieder vervollständigt.

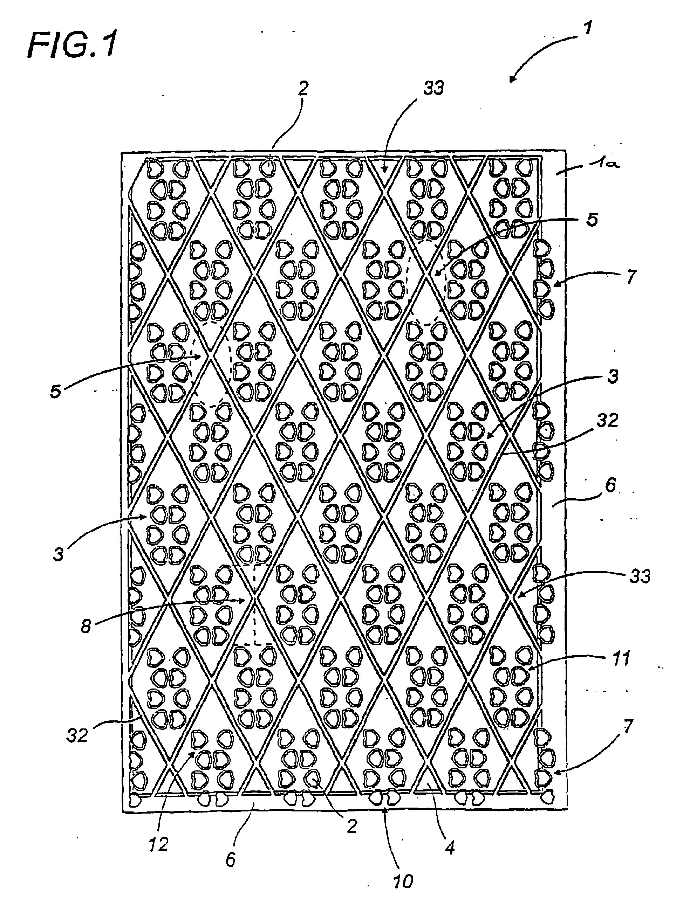

In Fig. 1 sind Abstände 8 zwischen den Gruppen 3 von Noppen 2 eingetragen. Die Abmessung dieser Abstände sind so gewählt, daß sie ein Verlegen handelsüblicher, zumeist flexibler Heizungsleitungen, insbesondere für Fußbodenheizungen ermöglichen. Der als Beispiel angegebene Abstand beträgt 50 mm. Es sind jedoch auch größere Abstände möglich, wie z.B. 200 mm zwischen einzelnen Gruppen in vertikaler Richtung in der Darstellung in Fig. 1, und ca. 120 mm in einer Richtung senkrecht dazu. Die Abmessungen von 120 mal 200 mm für den Freiraum entspricht dabei den Außenabmessungen einer Gruppe von Noppen. Dies ist in Fig. 1 gut zu sehen.

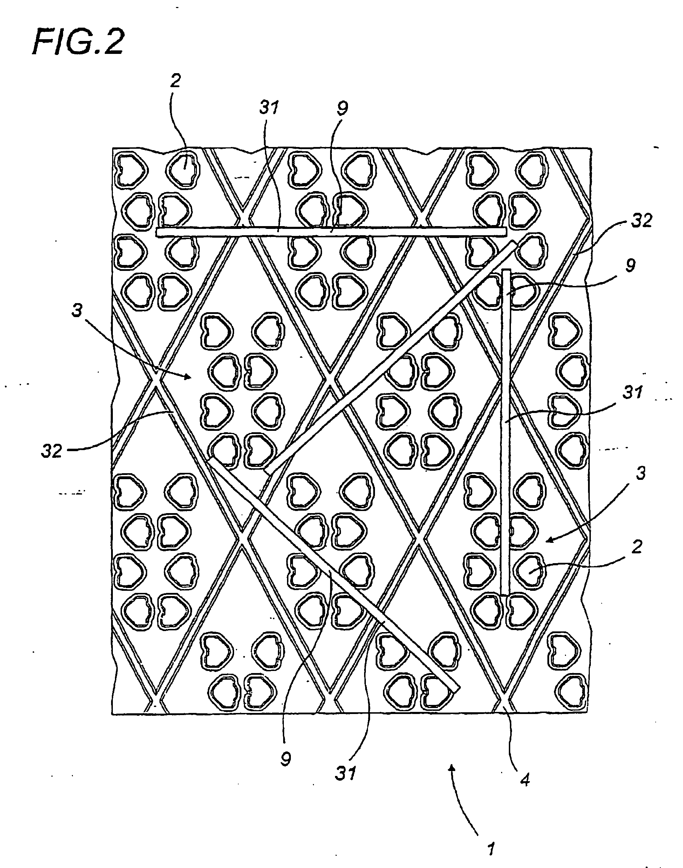

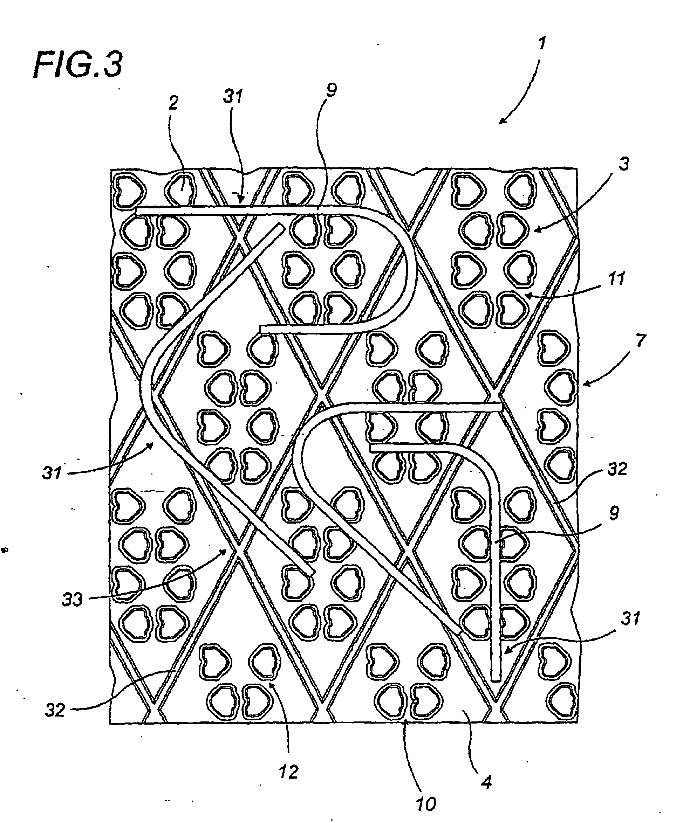

Die Gruppen 3 weisen eine paarweise Anordnung von Noppen 2 auf. Die Noppen bilden dabei Reihen parallel zu den Seiten der Noppenplatte 1. Durch diese Anordnung der Noppen ergeben sich längs und quer verlaufende Gänge 10 und 11 zwischen benachbarten Noppen. Gleichzeitig ergeben sich schräg verlaufende Gänge 12. Als Beispiel sind in Fig. 2 zur Illustration Stücke eines geraden Leitungsstücks 9 in die dermaßen gebildeten Gänge eingelegt. Wie gut zu sehen ist, kann das gerade Leitungsstück 9 entweder parallel zu den Seitenkanten der Noppenplatte, oder aber schräg dazu verlegt werden. Die schräg verlaufenden Leitungsstücke 9 schließen dabei einen Winkel von ca. 45° mit einer der beiden Seitenkanten der Noppenplatte 1 ein. Andererseits läßt die Gruppenanordnung der Noppen ein beliebiges Verlegen auch von gekrümmten Leitungsstücken 9 zu, wie es in Fig. 3 beispielhaft dargestellt ist.

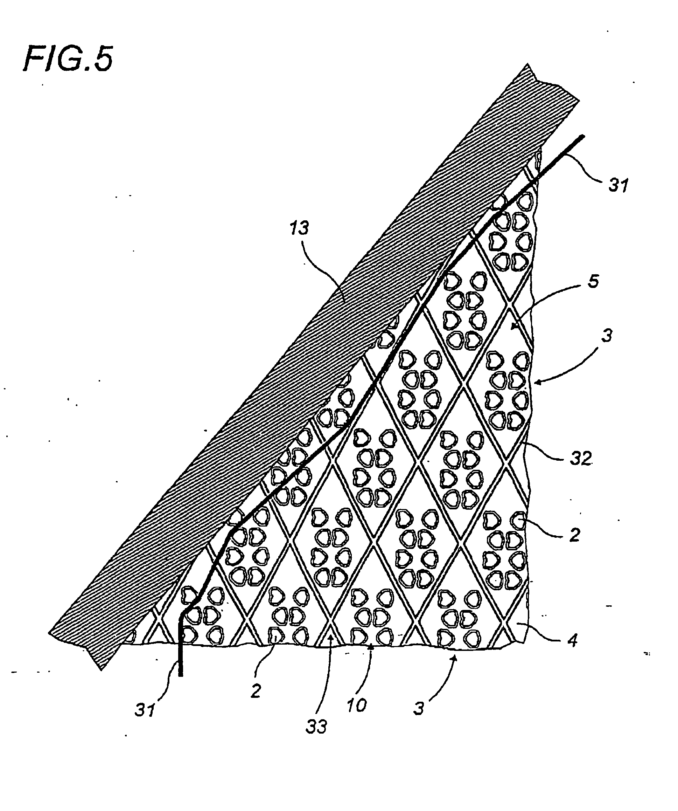

Eine weitere Möglichkeit des Verlegens eines Leitungsstücks ist in Fig. 5 dargestellt, wobei die Noppenplatte an einer Wand 13 verlegt ist. Dazu muß die Noppenplatte zuvor entsprechend abgeschnitten werden. Gleichwohl ermöglicht es die Anordnung der Noppen auch entlang einer solchen schrägen Wand ein Heizungsrohr möglichst nah an dieser Wand zu verlegen.

Im vorliegenden Beispiel werden die einzelnen Gruppen 3 jeweils durch acht Noppen 2 gebildet. Es ist jedoch auch denkbar, Gruppen aus vier Noppen zu bilden. Ebenso ist es denkbar, diese Gruppen aus einer größeren Anzahl von Noppen zu bilden. Die Anordnung der Noppen bzw. der Gruppen von Noppen erfolgte dabei vorzugsweise streng symmetrisch, so daß jede Gruppe die gleiche Anzahl von Noppen aufweist.

Die Noppen selbst weisen eine im wesentlichen übereinstimmende Grundform auf. Im vorliegenden Beispiel weisen die Noppen 2 eine nahezu identische Formgebung auf. Sie unterscheiden sich ausschließlich im mittleren Bereich einer ihrer Seiten.

Die Noppen 2 weisen einen Körper 14 mit einer Formgebung auf, die der eines Zapfens mit geraden Seiten entspricht, wodurch die Noppen eine Form ähnlich der eines Champignons annehmen. Genauer gesagt weist jede Noppe 2 eine konisch erweiterte Basis 15 auf, an der die Noppe quasi aus dem Grundkörper der Platte austritt und über die siemit der Oberfläche 4 des Grundkörpers verbunden ist. Der Körper 14 jeder Noppe verläuft wie ein Zapfen 16 und ist an den Seiten konkav. Dadurch wird dem Zapfen oder Noppen eine gewisse Verformungsfähigkeit senkrecht zu seiner Längserstreckung verliehen. Aufgrund der konischen Gestalt des Körpers 14 jedes Noppens 2 bildet das vom Grundkörper abgewandte Ende des Körpers 14 einen Abschnitt 17, der einen umlaufenden Rand als Halterung bildet. Der Abstand der benachbarten Noppen ist dabei so gewählt, daß er im wesentlichen einem Außendurchmesser einer Heizungsleitung entspricht. Der Abstand im Bereich des Endes 17 weist einen geringeren Abstand auf, der es einerseits ermöglicht, daß die Heizungsleitung zwischen den Noppen gehalten wird, und es andererseits ermöglicht, die Heizungsleitung zwischen den Noppen einzudrükken.

Grundsätzlich verfügt die Noppenplatte über zwei Typen von Noppen. Die beiden Typen verfügen über eine im wesentlichen prismatische Grundform mit Vorderseitenflächen VS, daran anschließenden Verbindungsseitenflächen VB, die sich beidseits an die Vorderseitenflächen anschließen und Rückseitenflächen RS, die sich jeweils an die Verbindungsseitenflächen anschließen und die miteinander verbunden sind. In einer Draufsicht auf die Oberfläche 4 des Grundkörpers 1 a sind die Noppen somit fünfeckig. Sie sind dabei symmetrisch entlang einer Linie senkrecht zur Vorderseitenfläche und durch den Verbindungsabschnitt der beiden Rückseitenflächen. Die beiden Verbindungsseitenflächen VB verlaufen parallel zueinander. Sämtliche Seitenflächen, also die Vorderseitenflächen VS, die Verbindungsseitenflächen VB und die Rückseitenflächen RS sind konkav ausgebildet. Jede dieser Seiten bildet dadurch eine Vertiefung 21.

Man unterscheidet zwischen zwei Typen der Vorderseitenflächen VS, nämlich die Vorderseite 18 mit Druckseiten 22 mit einem rippenähnlichen Vorsprung 23, der sich in vertikale Richtung erstreckt, und die Vorderseite 25, die eine nutförmige Ausnehmung 26 aufweist, wodurch zwei prismatische Vorsprunge 27 und 28 gebildet werden, die zur Außenseite des Körpers des Noppens hin verlaufen. Diese Vorsprünge bilden zwei Trägerzonen mit der Ausnehmung 26, die den Druck erhöhen, der durch den rippenförmigen Vorsprung 24 des anderen Noppens der vorderen Kante ausgeübt wird, wenn die beiden Vorderseiten 22 und 25 die Gange 10 bilden.

Die Noppen 2 bilden zwischen sich einen geraden- und länglichen Durchlaß, wenn die Vorderseiten 22 und 25 so angeordnet werden, daß sie die Form eines Schachtes bilden. Das als Beispiel eingelegte Leitungsstück 9 des Heizungsleitung wird durch die beiden Vorderseiten gehalten.

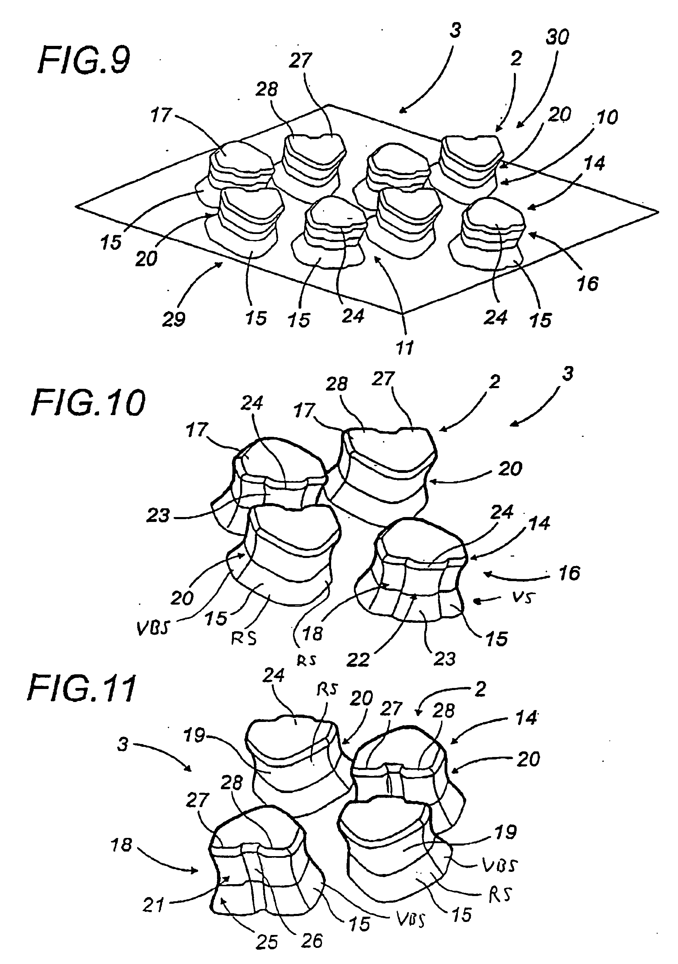

Die Grundanordnung innerhalb einer gleichen Gruppe von Noppen ist in den Abbildungen 9, 10, 14 und 15 dargestellt. Es handelt sich um eine Gruppe von acht Noppen, wie beispielhaft die nun folgende Beschreibung verdeutlichen soll. Die Gruppen können jedoch auch eine geringere Anzahl von Noppen aufweisen, z.B. 4 oder 6 oder eine sonstige gerade Anzahl von Noppen, je nach Bedarf.

Gemäß der bevorzugten Ausführungsform wird vorzugsweise eine gerade Anzahl von Noppen eingesetzt. Jedes Paar weist Noppen mit sich unterscheidenden Vorderseiten 22 und 25 auf. Noppen werden nebeneinander auf der gleichen längs verlaufenden Linie angeordnet, entweder so, daß sich ihre jeweiligen Vorderseitenflächen gegenüberliegen, oder in umgekehrter Anordnung, d.h., daß ihre jeweiligen Rückseitenflächen sich gegenüberliegen. Die Paare werden auf quer verlaufenden Linien immer abwechselnd angeordnet.

Die sich an den Ecken einer Gruppe 3 befindenden Noppen sind Umgehungsnoppen 29 und in diesem Fall so angeordnet, daß ihre Vorderseiten zum Inneren der Gruppe zeigen, oder Führungsnoppen 30, und in diesem Fall so angeordnet, daß ihre Vorderseitenfläche zum äußeren der Gruppe zeigt. Die Vorderseitenfläche dieser beiden Typen von Noppen, wenn sie so angeordnet sind, daß sie einen Schacht bilden, bilden nicht nur die Führung des Leitungsstücks 9 einer Heizungsleitung 31, sondem vor allem eine vertikale Befestigung durch Einklemmen dieses Leitungsstücks.

Wie sich anhand der Zeichnungen gut erkennen läßt, fluchten nicht nur die Vorderseiten VS 22 und 25 bzw. Vorderseitenflächen VS; einzelne Noppen, sondern auch die Rückseitenflächen RS benachbarter Paare von Noppen innerhalb einer Gruppe. Ebenso fluchten die Verbindungsseitenflächen VBS benachbarter Noppen. Zudem fluchten jeweils auch die Rückseitenflächen RS und Vorderseitenflächen VS von Noppen verschiedener Gruppen.

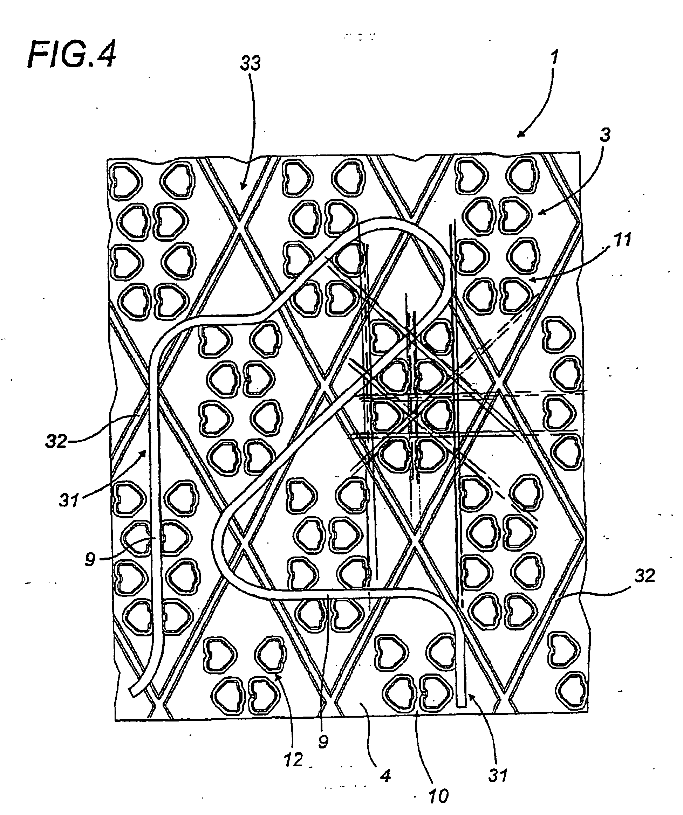

In Fig. 4 sind dazu schematisch mit gestrichelten Linien die einzelnen Verlegerichtungen von Leitungen innerhalb einer Gruppe dargestellt.

Die erfindungsgemäßen Noppen verfügen über rippenförmige Vorsprünge 32, die sich zwischen den einzelnen Gruppen von Noppen erstrecken. Diese rippenförmigen Vorsprünge 32 stehen gegenüber dem Grundkörper vor, jedoch wesentlich weniger als die Noppen selbst. Die rippenförmigen Vorsprünge bilden ein Rautenmuster 33, wobei die einzelnen Rauten jeweils Gruppen von Noppen umgeben. Diese rippenförmigen Vorsprünge dienen als Auflage für die Heizungsleitungen auf dem Grundkörper

Nachfolgend wird'die Wirkungs- und Funktionsweise der Erfindung näher erläutert:

Zum Verlegen einer Fußbodenheizung wird zunächst die Noppenplatte auf den Boden eines Raums gelegt. Dies erfolgt üblicherweise im Rohbaustadium eines Gebäudes. Der Boden wird vollständig mit Noppenplatten bedeckt. Die Noppenplatten liegen dabei mit ihren Seitenkanten aneinander. Je nach Gestaltung des Raumes müssen die Noppenplatten noch entsprechend zugeschnitten werden, z.B. entsprechend der Darstellung in Fig. 5.

Nachdem der Boden mit den Doppelplatten abgedeckt ist, können die Heizungsleitungen 31 verlegt werden. Zumeist handelt es sich hierbei um flexible Kunststoffleitungen, wie dies durch die Heizungsleitung 31 angedeutet ist. Es handelt sich hierbei um handelsübliche Heizungsleitungen, die unterschiedliche Durchmesser aufweisen können, wie z.B. 12 mm, 14 mm, 16 mm, 18 mm und 20 mm oder Zwischenmaße, sowie Abmessungen, die aus anderen Einheitensystemen stammen. Aufgrund der konischen Gestaltung der Seitenflächen lassen sich somit Heizungsleitungen unterschiedlichen Durchmessers in den Gängen zwischen den Noppen verlegen. Zum Verlegen werden die Heizungsleitungen zwischen die Noppen gedrückt, wobei dies aufgrund der Flexibilität des Materials der Noppen, bzw. Noppenplatten möglich ist. Das Eindrücken kann z.B. mit dem Fuß ausgeführt werden , um die Leitung zwischen den Noppen zu drücken, damit sie in der ihr zugedachten Position verbleibt.

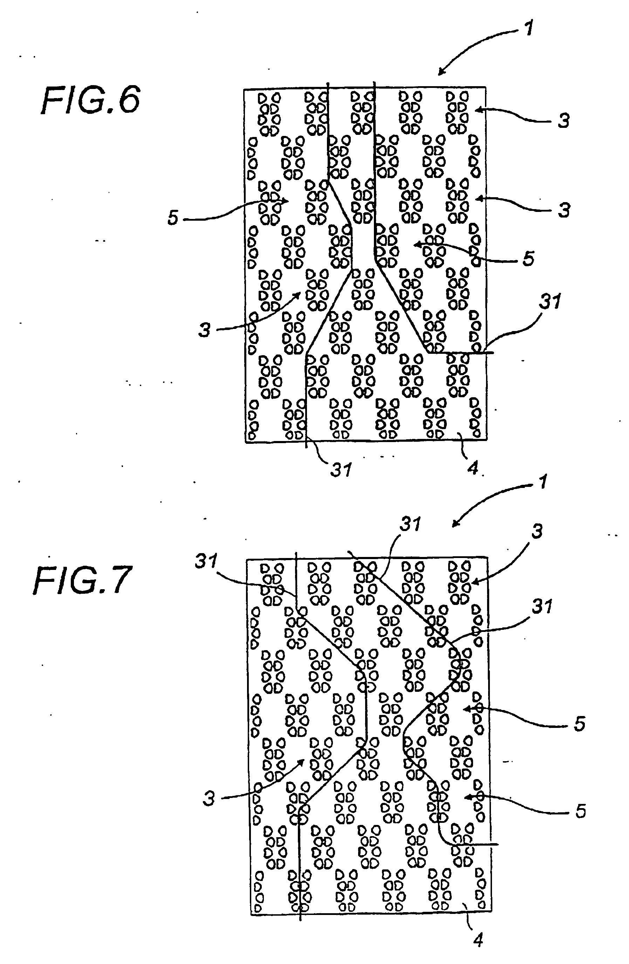

Das Verlegen der Heizungsleitungen kann in beliebigen Bahnen erfolgen. So ist es möglich, die Heizungsleitung entweder nur zwischen den Vorderseitenfläche der Noppen zu verlegen, oder zwischen den Verbindungsseitenflächen benachbarter Noppen, oder aber zwischen den Rückseitenflächen benachbarter Noppen. Dadurch, daß die Rückseitenflächen, Verbindungsseitenflächen und Vorderseitenflächen von Noppen unterschiedlicher Gruppen von Noppen miteinander fluchten, können auch größere gerade Distanzen überbrückt werden. Gleichzeitig ist es möglich, aufgrund der Freiräume die Heizungsleitungen mit beinahe beliebigen Krümmungsradien zu verlegen. Die verschiedenen Verlegemöglichkeiten sind insbesondere in den Fig. 2, 3, 4, 5, 6 und 7 gut zu erkennen. In Fig. 4 sind die Verlegerichtungen durch gestrichelte Linien angedeutet.

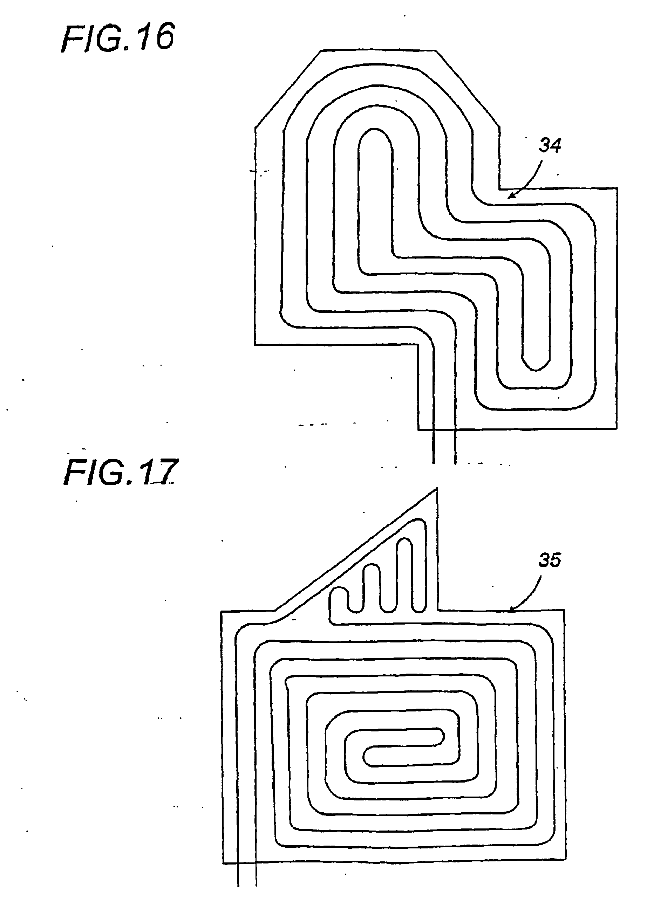

Auch in den Fig. 16 und 17 sind Verlegebeispiele von Räumen zu sehen. Hierbei wurden bereits mehrere Platten aneinandergelegt.

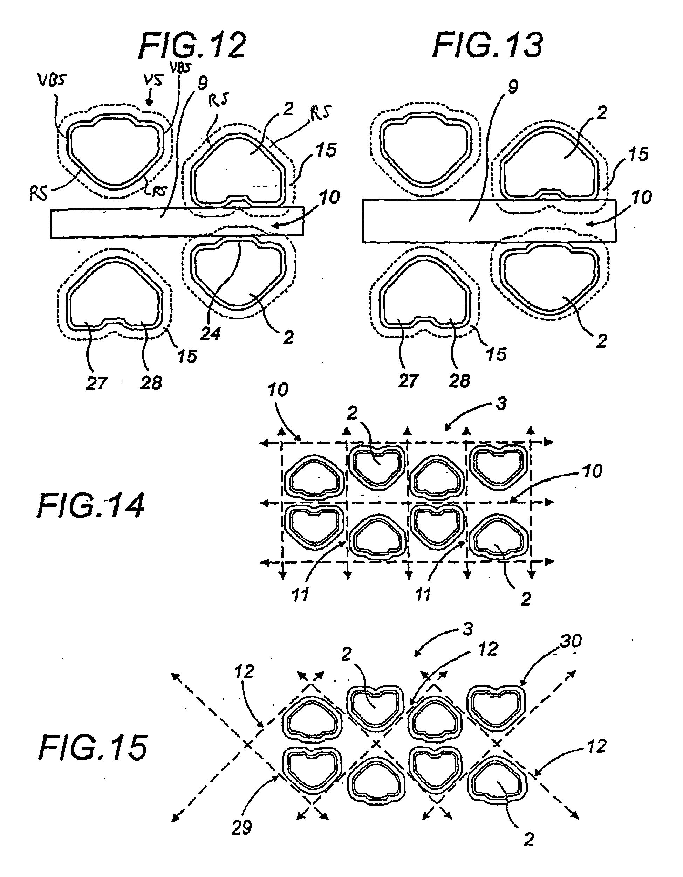

Die verschiedenen Möglichkeiten des Verlegens ergeben sich auch anhand der Fig. 12 bis 15. In den Fig. 12 und 13 ist dargestellt, wie Heizungsleitungen unterschiedlichen Durchmessers in der Noppenplatte verlegt werden können. In Fig. 14 und 15 werden durch gestrichelte Linien die Richtungen angedeutet, in denen die Heizungsleitungen verlegt werden können.

Die Beliebigkeit des Verlegens ergibt sich insbesondere durch die Freiräume zwischen den einzelnen Gruppen von Noppen. Erst dadurch wird es möglich, beinahe beliebige Verlegerichtungen für die Heizungsleitungen zu wählen. Dies bedeutet einen entscheidenden Fortschritt gegenüber herkömmlichen Noppenplatten, die dem Verleger ein bestimmtes Verlegemuster aufdrängen.

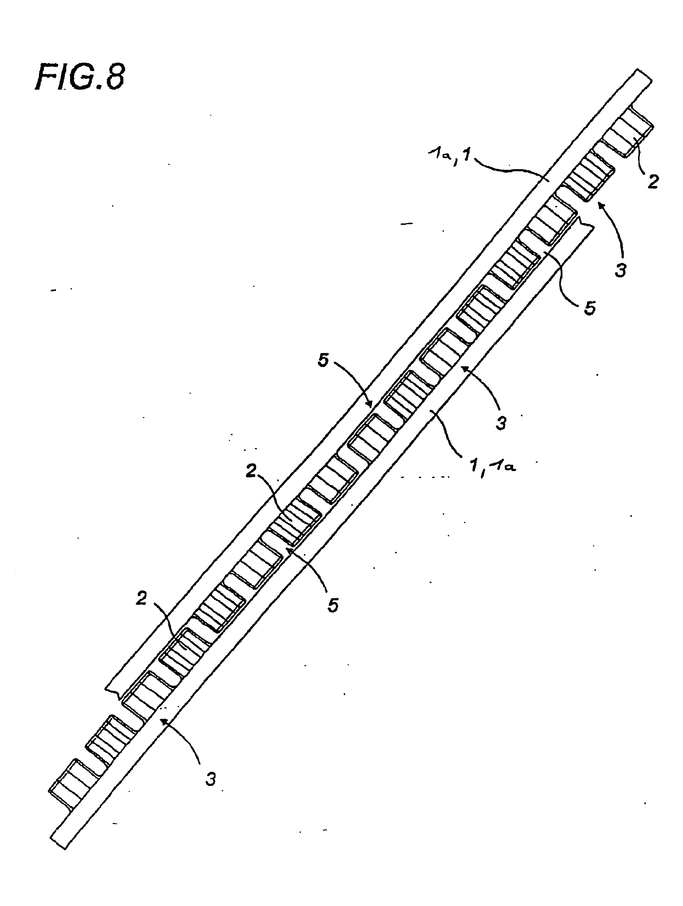

Wenn die Heizungsleitungen in die Gänge eingelegt sind, stützen sie sich senkrecht zur Oberfläche des Grundkörpers der Noppenplatte über die Rippen 32 ab. Diese ermöglichen es, daß die Heizungsleitungen nur im Bereich der Rippen mit dem eigentlichen Grundkörper der Noppenplatte in Verbindung gelangen. Zwischen den Rippen werden die Heizungsleitungen aufgrund ihrer Steifigkeit freitragend verlegt, das bedeutet, sie haben einen Abstand gegenüber dem Grundkörper. In alternativen Lösungen ist es auch denkbar, Paare von Noppen durch einzelne Rippen miteinander zu verbinden. Diese Rippen haben den Vorteil, daß während des Einbringens des Estriches, der Estrich die Heizungsleitungen vollständig umschließt. Dieses Einbringen von Estrich erfolgt nach dem Verlegen der Heizungsleitungen zum Fertigstellen des Fußbodens. Ein weiterer Vorteil der Erfindung ergibt sich aus den Freiräumen hinsichtlich der Lagerfähigkeit und der Transportfähigkeit der Noppenplatten. In Fig. 8 ist dabei erkennbar, wie die erfindungsgemäßen Noppenplatten gelagert werden können. Aufgrund der Gestaltung der Gruppen von Noppen und der zwischen ihnen angeordneten Freiräume ist es nämlich möglich, die Noppenplatten in der Art zu lagern, daß die Noppen aufeinandergestapelter Noppenplatten einander zugewandt sind, wobei die Gruppen von Noppen der einen Noppenplatte in den Freiräumen der andere Noppenplatte aufgenommen sind. Dadurch wird die Stapelhöhe drastisch reduziert.

## Patentansprüche

1. Noppenplatte zum Verlegen von Leitungen für in Fußböden oder Wänden integrierten Heiz- oder Kühleinrichtungen, mit einer Vielzahl von gegenüber einem im Wesentlichen plattenförmigen Grundkörper (1b) vorstehenden Noppen (2), zwischen denen die Leitungen einbringbar sind, und die Noppen in Gruppen angeordnet sind, die jeweils Abstände zueinander aufweisen, um dadurch Freiräume (5) zu erzeugen, deren Abmessungen zwischen den Gruppen wenigstens den Außenabmessungen der Gruppen entsprechen und die Noppen jeweils im Wesentlichen prismenförmig sind mit fünf Seitenflächen, wobei eine Vorderseitenfläche (VS) vorgesehen ist, an die beidseitig sich jeweils eine Verbindungsseitenfläche (VBS) anschließt, und zwei Rückseitenflächen (RS) vorgesehen sind, die sich an die Verbindungsseitenflächen anschließen und miteinander verbunden sind, **dadurch gekennzeichnet, dass** die Verbindungsseitenflächen parallel zueinander sind, dass zwei unterschiedliche Typen von Noppen vorgesehen sind, die sich in der Gestaltung der Vorderseitenfläche unterscheiden, wobei beim Noppen des ersten Noppentyps ein rippenförmiger Vorsprung, der gegenüber der Vorderseitenfläche vorsteht und beim Noppen des zweiten Noppentyps eine nutförmige Ausnehmung vorgesehen ist, die gegenüber der Vorderseitenfläche zurückspringt und dass die Gruppen aus zumindest einem Paar von Noppen, deren Vorderseitenflächen und einem Paar von Noppen, deren Rückseitenflächen einander zugekehrt sind, gebildet werden.

2. Noppenplatte nach Anspruch 1, **dadurch gekennzeichnet, dass** die Gruppen von Noppen in regelmäßigen Abständen über die gesamte Fläche der Oberseite (4) des Grundkörpers verteilt sind.

3. Noppenplatten nach einem der vorangegangenen Ansprüche, **dadurch gekennzeichnet, dass** die Freiräume (5) in regelmäßigen Abständen über die gesamte Fläche der Oberseite (4) der Noppenplatte verteilt sind.

4. Noppenplatte nach einem der vorangegangenen Ansprüche, **dadurch gekennzeichnet, dass** die Noppen (2) innerhalb einer Gruppe (3) so angeordnet sind, dass sie zwischen sich im Verhältnis zu den Hauptrichtungen der rechteckigen Noppenplatte längsverlaufende Gänge (10) und querverlaufende Gänge (11) bilden, in die die Leitungen einlegbar sind.

5. Noppenplatte nach einem der vorangegangenen Ansprüche, **dadurch gekennzeichnet, dass** Noppen benachbarter Gruppen zwischen ihnen Gänge (10, 11) bilden, die sich in eine der Hauptrichtungen des Grundkörpers erstrecken.

6. Noppenplatte nach einem der vorangegangenen Ansprüche, **dadurch gekennzeichnet, dass** die Noppen benachbarter Gruppen zwischen ihnen Gänge (12) bilden, die sich schräg, vorzugsweise um 45° geneigt zu den Hauptrichtungen des Grundkörpers erstrecken.

7. Noppenplatte nach einem der vorangegangenen Ansprüche, **dadurch gekennzeichnet, dass** jede Gruppe (31) eine gerade Anzahl von Noppen (2) aufweist.

8. Noppenplatte nach Anspruch 1, **dadurch gekennzeichnet, dass** die Vorderseitenflächen und/oder die Verbindungsseitenflächen und/oder die Rückseitenflächen zwei benachbarter Noppen am vom Grundkörper abgewandten Ende der Noppen einen größeren Abstand als zwischen diesem Ende und dem Grundkörper aufweisen.

9. Noppenplatte nach einem der vorangegangenen Ansprüche, **dadurch gekennzeichnet, dass** die Rückseitenfläche einen Winkel von ca. 90° einschließen.

10. Noppenplatte nach einem der vorangegangenen Ansprüche, **dadurch gekennzeichnet, dass** die Rückseitenflächen und Vorderseitenflächen und Verbindungsseitenflächen benachbarter Paare von Noppen miteinander fluchten.

11. Noppenplatte nach einem der vorangegangenen Ansprüche, **dadurch gekennzeichnet, dass** die Rückseitenflächen und Vorderseitenflächen und Verbindungsflächen von Noppen benachbarter Gruppen jeweils fluchten.

12. Noppenplatte nach einem der vorangegangenen Ansprüche, **dadurch gekennzeichnet, dass** vorzugsweise rippenförmige Vorsprünge (32) auf dem Grundkörper vorgesehen sein können, die gegenüber dem Grundkörper weniger vorstehen als die Noppen und auf welche Vorsprünge die Leitungen auflegbar sind.

13. Noppenplatte nach einem der vorangegangenen Ansprüche, **dadurch gekennzeichnet, dass** die Vorsprünge als Rippen (32) ausgebildet sind.

14. Noppenplatte nach Anspruch 13, **dadurch gekennzeichnet, dass** die Rippen sich zwischen den benachbarten Gruppen erstrecken.

15. Noppenplatte nach einem der Ansprüche 13 oder 14, **dadurch gekennzeichnet, dass** die Rippen mit einer Seitenkante des Grundkörpers (1a) einen Winkel von vorzugsweise 60° einschließen.

16. Noppenplatte nach einem der Ansprüche 13 bis 15, **dadurch gekennzeichnet, dass** die Rippen sich kreuzend ein Gittermuster bilden.

17. Noppenplatte nach einem der Ansprüche 13 bis 16, **dadurch gekennzeichnet, dass** die Rippen Gruppen von Noppen umrahmen.

18. Noppenplatte nach einem der Ansprüche 13 bis 17, **dadurch gekennzeichnet, dass** das durch die Rippen erzeugte Gittermuster im Wesentlichen rautenförmig ist.

19. Noppenplatte nach einem der Ansprüche 13 bis 18, **dadurch gekennzeichnet, dass** die Rippen sich in den Freiräumen kreuzen.

20. Noppenplatte nach einem der vorangegangenen Ansprüche, **dadurch gekennzeichnet, dass** der Grundkörper einen umlaufenden Rand aufweist, der im Wesentlichen in gleicher Höhe wie die Rippen gegenüber dem Grundkörper vorsteht.

21. Noppenplatte nach einem der vorangegangenen Ansprüche, **dadurch gekennzeichnet, dass** zumindest die Noppen elastisches Material aufweisen.

22. Noppenplatte nach einem der vorangegangenen Ansprüche, **dadurch gekennzeichnet, dass** die Noppenplatte aus Kunststoff, vorzugsweise Polystyrol hergestellt ist.

## Claims

1. Stud plate for laying lines of heating or cooling systems integrated in floors or walls, with numerous studs (2) projecting from an essentially plate-shaped base (1b), between which the lines can be inserted, and the studs are arranged in groups (3) with interposing gaps in order to create free spaces (5) whose dimensions between the groups correspond at least the outside dimensions of the groups, and the studs are essentially prismatic in shape with five side faces, with one front face (VS) connected to side faces (VBS) at each side, and two rear faces (RS) which are connected to the side faces and to each other, **characterized in that** the side faces are parallel to each other, that two different types of studs are provided which differ in the shape of their front faces and in which the studs of the first stud type have a ribbed projection extending from the front face and in which the studs of the second stud type have a grooved recess in the front face, and **in that** the groups are formed by at least one pair of studs whose front faces face each other and one pair of studs whose rear faces face each other.

2. Stud plate according to Claim 1, **characterized in that** the groups of studs are distributed at regular distances over the entire upper surface (4) of the base plate.

3. Stud plate according to one of the above claims, **characterized in that** the free spaces (5) are distributed at regular distances over the entire upper surface (4) of the stud plate.

4. Stud plate according to one of the above claims, **characterized in that** the studs (2) are arranged in each group (3) such that they form longitudinal paths (10) and transverse paths (11) between each other in relation to the primary axes of the rectangular stud plate in which the lines can be laid.

5. Stud plate according to one of the above claims, **characterized in that** the studs of adjacent groups form paths (10, 11) between each other which extend in one of the main axes of the base.

6. Stud plate according to one of the above claims, **characterized in that** the studs of adjacent groups form paths (12) between each other which extend diagonally, preferably at 45°, to the main axes of the base.

7. Stud plate according to one of the above claims, **characterized in that** each group (31) has an even number of studs (2).

8. Stud plate according to Claim 1, **characterized in that** the front faces and/or the side faces and/or the rear faces of two adjacent studs have greater distances between each other at the ends of the studs facing away from the base than between this end and the base.

9. Stud plate according to one of the above claims, **characterized in that** the rear faces form an angle of approximately 90°.

10. Stud plate according to one of the above claims, **characterized in that** the rear faces and front faces and side faces of adjacent pairs of studs are aligned with each other.

11. Stud plate according to one of the above claims, **characterized in that** the rear faces and front faces and side faces of studs of adjacent groups are aligned with each other.

12. Stud plate according to one of the above claims, **characterized in that** preferably rib-shaped projections (32) can be provided on the base which project less from the base than the studs and upon which the lines can be laid.

13. Stud plate according to one of the above claims, **characterized in that** the projections are formed as ribs (32).

14. Stud plate according to Claim 13, **characterized in that** the ribs extend between the adjacent groups.

15. Stud plate according to one of the claims 13 and 14, **characterized in that** the ribs form an angle of preferably 60° with a side edge of the base (1a).

16. Stud plate according to one of the claims 13 to 15, **characterized in that** the ribs intersect to form a grid pattern.

17. Stud plate according to one of the claims 13 to 16, **characterized in that** the ribs enclose groups of studs.

18. Stud plate according to one of the claims 13 to 17, **characterized in that** the grid pattern formed by the ribs is essentially diamond shaped.

19. Stud plate according to one of the claims 13 to 18, **characterized in that** the ribs intersect in the free spaces.

20. Stud plate according to one of the above claims, **characterized in that** the base has a surrounding edge which projects essentially to the same height from the base as the ribs.

21. Stud plate according to one of the above claims, **characterized in that** at least the studs consist of elastic material.

22. Stud plate according to one of the above claims, **characterized in that** the stud plate is made of plastic, preferably polystyrene.

## Revendications

1. Plaque isolante à plots, utilisée afin de poser des conduites pour des installations de chauffage ou de rafraîchissement intégrées dans des planchers ou des murs, qui présente un grand nombre de plots (2) en relief par rapport à un solide de base (1 b) dont la forme est à peu près celle d'une plaque entre lesquels les conduites peuvent être placées, les plots étant disposés en groupes, distants les uns des autres, produisant ainsi des espaces libres (5), la distance qui sépare les groupes étant supérieure ou égale aux dimensions extérieures des groupes, et les plots ayant chacun à peu près la forme d'un prisme à cinq faces latérales prévues comme ci-dessous une face latérale avant (VS) avec, sur chacun de ses deux côtés, une face latérale de jonction (VBS), les deux faces latérales de jonction étant contiguës à la face latérale avant et deux faces latérales arrière (RS) ajoutées l'une à l'autre et qui sont contiguës aux faces latérales de jonction, **caractérisée en ce que** les faces latérales de jonction sont parallèles entre elles, que deux types différents de plots sont prévus, qui se différencient par la forme de leur face latérale avant, les plots du premier type présentant une nervure en saillie par rapport à la face latérale avant et les plots du deuxième type une rainure en retrait par rapport à la face latérale avant et que les groupes sont constitués au moins d'une paire de plots dont les faces latérales avant sont tournées l'une vers l'autre et d'une paire de plots dont les faces latérales arrière sont également tournées l'une vers l'autre.

2. Plaque isolante à plots selon la revendication 1, **caractérisée en ce que** les groupes de plots sont répartis à distances régulières sur l'ensemble de la surface de la face supérieure (4) du solide de base.

3. Plaque isolante à plots selon l'une des revendications précédentes, **caractérisée en ce que** les espaces libres (5) sont répartis à distances régulières sur l'ensemble de la surface de la face supérieure (4) de la plaque isolante.

4. Plaque isolante à plots selon l'une des revendications précédentes, **caractérisée en ce que** la disposition des plots (2) à l'intérieur d'un groupe (3) a le résultat suivant : entre les plots se forment des passages longitudinaux (10) et perpendiculaires (11) aux directions principales de la plaque isolante à plots de forme rectangulaire, passages dans lesquels les conduites peuvent être placées.

5. Plaque isolante à plots selon l'une des revendications précédentes, **caractérisée en ce que** les plots de groupes voisins forment entre eux des passages (10, 11) à l'une des directions principales du solide de base.

6. Plaque isolante à plots selon l'une des revendications précédentes, **caractérisée en ce que** les plots de groupes voisins produisent entre eux des passages (12) dans le sens de la diagonale, formant un angle de 45° de préférence par rapport aux directions principales du solide de base.

7. Plaque isolante à plots selon l'une des revendications précédentes, **caractérisée en ce que** chaque groupe (31) présente un nombre pair de plots (2).

8. Plaque isolante à plots selon la revendication 1, **caractérisée en ce que** la distance entre les faces latérales avant et/ou les faces latérales de jonction et/ou les faces latérales arrière de deux plots voisins au niveau de la base du plot opposée au solide de base est plus grande que celle entre ces mêmes faces à un niveau situé entre la base du plot opposée au solide de base et le solide de base.

9. Plaque isolante à plots selon l'une des revendications précédentes, **caractérisée en ce que** les faces latérales arrière forment un angle de 90° environ.

10. Plaque isolante à plots selon l'une des revendications précédentes, **caractérisée en ce que** les faces latérales arrière et les faces latérales avant et les faces latérales de jonction des paires de plots voisins sont alignées entre elles.

11. Plaque isolante à plots selon l'une des revendications précédentes, **caractérisée en ce que** les faces latérales arrière et les faces latérales avant et les faces latérales de jonction des plots de groupes voisins sont alignées entre elles.

12. Plaque isolante à plots selon l'une des revendications précédentes, **caractérisée en ce que** l'on peut prévoir, sur le solide de base, une rehausse (32), de préférence sous forme de nervures qui sont moins saillantes que les plots et sur lesquelles on peut poser les conduites.

13. Plaque isolante à plots selon l'une des revendications précédentes, **caractérisée en ce que** cette rehausse (32) est constituée de nervures.

14. Plaque isolante à plots selon la revendication 13, **caractérisée en ce que** les nervures passent entre les groupes voisins.

15. Plaque isolante à plots selon l'une des revendications 13 ou 14, **caractérisée en ce que** les nervures forment un angle de 60° de préférence avec un des bords du solide de base (1a).

16. Plaque isolante à plots selon l'une des revendications 13 à 15, **caractérisée en ce que** les nervures s'entrecroisent pour former une résille.

17. Plaque isolante à plots selon l'une des revendications 13 à 16, **caractérisée en ce que** les nervures encadrent des groupes de plots.

18. Plaque isolante à plots selon l'une des revendications 13 à 17, **caractérisée en ce que** les nervures forment à peu près une résille de losanges.

19. Plaque isolante à plots selon l'une des revendications 13 à 18, **caractérisée en ce que** les nervures s'entrecroisent dans les espaces libres.

20. Plaque isolante à plots selon l'une des revendications précédentes, **caractérisée en ce que** le solide de base présente, à sa circonscription, un rebord en saillie, dont la hauteur par rapport au solide de base est à peu près la même que celle des nervures.

21. Plaque isolante à plots selon l'une des revendications précédentes, **caractérisée en ce que** les plots, au moins, sont constitués d'un matériau élastique.

22. Plaque isolante à plots selon l'une des revendications précédentes, **caractérisée en ce que** la plaque isolante à plots est fabriquée en matière plastique, de préférence en polystyrène.
